# EUROPEAN PATENT APPLICATION

(11) **EP 2 442 494 A1**
(43) Date of publication of application: **18.04.2012**
(21) Application number: 10806006.2
(22) Date of filing: 21.07.2010
(51) Int. Cl.: H04L 12/26, H04L 29/06, H04L 12/56

(54) **METHOD AND NETWORK DEVICE FOR ASSOCIATED CHANNEL CAPABILITY NEGOTIATION**

(30) Priority: 07.08.2009 CN 200910161056
(71) Applicant: Huawei Technologies Co., Ltd., Shenzhen, Guangdong 518129 (CN)
(72) Inventor: GUO, Xinchun, Shenzhen Guangdong 518129 (CN)
(74) Representative: Charles, Glyndwr
(86) International application number: PCT/CN2010/075349
(87) International publication number: WO 2011/015102

(57) **Abstract**

In the field of communication technologies, a method and a network device for Associated Channel (ACH) capability negotiation are provided. The method mainly includes: receiving a first label mapping message; judging whether the first label mapping message carries ACH capability information of a first node; if the first label mapping message carries the ACH capability information of the first node, generating a second label mapping message, where the second label mapping message carries the ACH capability information of the first node; and sending the second label mapping message to an upstream node. The method may be applied in a Multi-Protocol Label Switching (MPLS) network, and may be used for distribution and negotiation of ACH capabilities of a network device.

## Description

This application claims priority to Chinese Patent Application No. 200910161056.4, filed with the Chinese Patent Office on August 7, 2009 and entitled "METHOD AND NETWORK DEVICE FOR ASSOCIATED CHANNEL CAPABILITY NEGOTIATION", which is incorporated herein by reference in its entirety.

### FIELD OF THE INVENTION

The present invention relates to the field of network communication technologies, and in particular, to a method and a network device for Associated Channel (ACH) capability negotiation.

### BACKGROUND OF THE INVENTION

With the continuous development of the network and the continuous advancement of information technology, various new services emerge continuously. The new services put forward higher requirements on Quality of Service (QoS) and management control of the network. Special packets, such as an Operation Administration Maintenance (OAM) packet, a Management Control Channel (MCC) packet, and a Signaling Control Channel (SCC) packet, are different from data packets in transmission paths, and manners of processing the special packets are not the same, thereby making management and maintenance of the network more difficult.

In the prior art, an ACH may be used on a Pseudo Wire (PW) in a Multi-Protocol Label Switching (MPLS) network to transfer limited special packets, such as the OAM packet, the MCC packet, and the SCC packet, so as to transfer and process the special packets and data packets in the same manner.

During the research on the prior art, the inventor finds that distribution and negotiation of ACH capability information cannot be performed between nodes on a Label Switched Path (LSP) level, so that each node cannot know ACH capabilities of other nodes, thereby not supporting special packets to be transferred on the LSP level through an ACH mechanism.

### SUMMARY OF THE INVENTION

The present invention provides a method and a network device for ACH capability negotiation, which enable special packets to be transferred on an LSP level through an ACH mechanism.

An embodiment of the present invention provides a method for ACH capability negotiation, where the method includes:
receiving a first label mapping message;
determining whether the first label mapping message carries ACH capability information of a first node;
if the first label mapping message carries the ACH capability information of the first node, generating a second label mapping message, where the second label mapping message carries the ACH capability information of the first node; and
sending the second label mapping message to an upstream node.

An embodiment of the present invention further provides a method for ACH capability negotiation, where the method includes:
generating a notification message, and adding ACH capability information of local node in an option parameter field of the notification message; and sending the notification message carrying the ACH capability information of local node to a target node.

An embodiment of the present invention further provides a method for ACH capability negotiation, where the method includes:
generating a label mapping message, and writing ACH capability information of local node into a Connectivity Verification (CV) reserved field of a Virtual Circuit Connectivity Verification (VCCV) parameter in the label mapping message; or
generating a label mapping message, adding a Generic Associated Channel Header (G-ACH) sub-Type-Length-Value (TLV) field in an interface parameter sub-TLV field of a Pseudo Wire Identifier (PWid) Forwarding Equivalence Class (FEC) element of the label mapping message, and writing the ACH capability information of local node into the G-ACH sub-TLV field; or
generating a label mapping message, adding a G-ACH sub-TLV field in an interface parameter TLV field of a generalized PWid FEC element of the label mapping message, and writing the ACH capability information of local node in the G-ACH sub-TLV field; and
sending the label mapping message in which the ACH capability information of local node is written.

A network device provided in an embodiment of the present invention includes:
a first receiving unit, configured to receive a first label mapping message;
a first determining unit, configured to determine whether the first label mapping message carries ACH capability information of a first node;
a mapping message generating unit, configured to generate a second label mapping message when the first determining unit determines that the first label mapping message carries the ACH capability information of the first node, where the second label mapping message carries the ACH capability information of the first node; and
a first sending unit, configured to send the second label mapping message to an upstream node.

A network device provided in an embodiment of the present invention includes:
a notification message generating unit, configured to generate a notification message, and add ACH capability information of local node in an option parameter field of the notification message; and
a notification message sending unit, configured to send the notification message carrying the ACH capability information of local node to a target node.

A network device provided in an embodiment of the present invention includes:
a first message generating unit, configured to generate a label mapping message, and write ACH capability information of local node in a CV reserved field of a VCCV parameter in the label mapping message; and
a fifth sending unit, configured to send the label mapping message in which the ACH capability information of local node is written.

A network device provided in an embodiment of the present invention includes:
a second message generating unit, configured to generate a label mapping message, add a G-ACH sub-TLV field in an interface parameter sub-TLV field of a PWid FEC element of the label mapping message, and write ACH capability information of local node in the G-ACH sub-TLV field; and
a sixth sending unit, configured to send the label mapping message in which the ACH capability information of local node is written.

A network device provided in an embodiment of the present invention includes:
a third message generating unit, configured to generate a label mapping message, add a G-ACH sub-TLV field in an interface parameter TLV field of a generalized PWid FEC element of the label mapping message, and write ACH capability information of local node in the G-ACH sub-TLV field; and
a seventh sending unit, configured to send the label mapping message in which the ACH capability information of local node is written.

In the embodiments of the present invention, an intermediate node sends ACH capability information of a first node to an upstream node through a label mapping message, and the first node may be an egress node, so that the label mapping message received by an ingress node carries an ACH capability of the egress node, and the ingress node may acquire the ACH capability of the egress node according to the received label mapping message. Compared with the prior art, in the embodiments of the present invention, the label mapping message carrying the ACH capability information of the egress node is sent, so as to support distribution and negotiation of ACH capabilities of nodes on an LSP level, so that OAM packets and other special packets can be transferred on the LSP level through an ACH mechanism, that is, special packets and data packets are transferred and processed by the same manner on the LSP level.

### BRIEF DESCRIPTION OF THE DRAWINGS

FIG. 1 is a flow chart of a first embodiment of a method for ACH capability negotiation provided by the present invention;
FIG. 2 is a flow chart of a second embodiment of the method for ACH capability negotiation provided by the present invention;
FIG. 3 is a flow chart of a third embodiment of the method for ACH capability negotiation provided by the present invention;
FIG. 4 is a flow chart of a fourth embodiment of the method for ACH capability negotiation provided by the present invention;
FIG. 5 is a flow chart of a fifth embodiment of the method for ACH capability negotiation provided by the present invention;
FIG. 6 is a flow chart of a sixth embodiment of the method for ACH capability negotiation provided by the present invention;
FIG. 7 is a flow chart of a seventh embodiment of the method for ACH capability negotiation provided by the present invention;
FIG. 8 is a schematic diagram of a first embodiment of a network device provided by the present invention;
FIG. 9 is a schematic diagram of a second embodiment of the network device provided by the present invention;
FIG. 10 is a schematic diagram of a third embodiment of the network device provided by the present invention;
FIG. 11 is a schematic diagram of a fourth embodiment of the network device provided by the present invention;
FIG. 12 is a schematic diagram of a fifth embodiment of the network device provided by the present invention;
FIG. 13 is a schematic diagram of a sixth embodiment of the network device provided by the present invention; and
FIG. 14 is a schematic diagram of a seventh embodiment of the network device provided by the present invention.

### DETAILED DESCRIPTION OF THE EMBODIMENTS

The present invention provides a method and a network device for ACH capability negotiation. For better understanding of the technical solutions of the present invention, embodiments of the present invention are described below in detail with reference to the accompanying drawings.

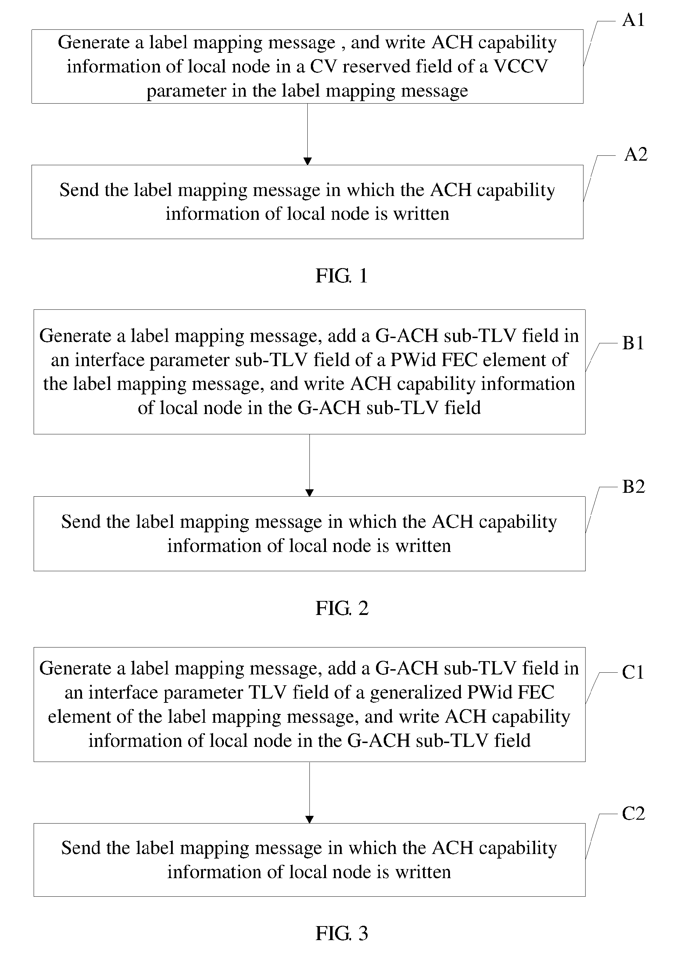

Referring to FIG. 1, FIG. 1 is a flow chart of a first embodiment of a method for ACH capability negotiation according to the present invention.

In the embodiment of the present invention, a first Provider Edge (PE) router and a second PE router set up a PW through Label Distribution Protocol (LDP). A process of ACH capability negotiation performed by the first PE router and the second PE router mainly includes:
A1: Generate a label mapping message, and write ACH capability information of local node into a CV reserved field of a VCCV parameter in the label mapping message.

In the embodiment of the present invention, a first PE router and a second PE router may generate a label mapping message, and write the ACH capability information of local node into the CV reserved field of the VCCV parameter in the label mapping message.

The written ACH capability information may include capabilities, such as Operation Administration Maintenance (OAM, Operation Administration Maintenance), Automatic Protection Switch (APS, Automatic Protection Switch), Management Control Channel (MCC, Management Control Channel), and Signaling Control Channel (SCC, Signaling Control Channel). The OAM capability may include information such as Continuity Check (CC, Continuity Check), Continuity Verification (CV, Continuity Verification), Performance Monitoring (PM, Performance Monitoring), failure reporting, Alarm Suppression (AS, Alarm Suppression), Remote Defect Indication (RDI, Remote Defect Indication), and Lock Reporting (LR, Lock Reporting). The CV may include a Label Switched Path Protocol Ping (Label Switch Protocol Ping) tool, an Internet Control Messages Protocol ping (ICMP Ping, Internet Control Messages Protocol Ping) tool, and a Bi-directional Forwarding Detection (BFD, Bi-directional Forwarding Detection) tool. The PM may include: packet loss, performance delay (Performance Delay), and jitter (jitter).

A2: Send the label mapping message into which the ACH capability information of local node is written.

In the embodiment of the present invention, the first PE router and the second PE router performing the ACH capability negotiation respectively send the label mapping message, into which an ACH capability of local node is written, to an remote PE router. Upon receiving the label mapping message, the remote PE router can acquire the ACH capability information of its remote PE router, so that an ACH capability supported by both ends is used to transfer a special packet on a PW level.

In the embodiment of the present invention, the CV reserved field of the VCCV parameter in the label mapping message is extended, so that distribution and negotiation of special functions, such as the newly added OAM, can be performed between PEs, that is, negotiation of more ACH capabilities is supported on the PW level.

In the embodiment of the present invention, the VCCV parameter defined on the PW level is as follows:

| Parameter ID | Length | Description |
|---|---|---|
| 0x0c | 4 | VCCV |

A TLV (Type-Length-Value) format of the VCCV parameter is shown in Table 1:

**Table 1**

| | | | |
|---|---|---|---|
| 0 | 1 | 2 | 3 |
| Type | Length | CC Type | CV Type |

For an ordinary MPLS (Multiprotocol Label Switch) tunnel PW, the following CC types may be set:
MPLS Control Channel (CC) Types:

| Bit (Value) | Description |
|---|---|
| Bit 0 (0x01) | - Type 1: PWE3 Control Word with 0001b as First nibble (PW-ACH, see [RFC4385]) |
| Bit 1 (0x02) | - Type 2: MPLS Router Alert Label |
| Bit 2 (0x04) | - Type 3: MPLS PW Label with TTL == 1 |
| Bit 3 (0x08) | - Reserved |
| Bit 4 (0x10) | - Reserved |
| Bit 5 (0x20) | - Reserved |
| Bit 6 (0x40) | - Reserved |
| Bit 7 (0x80) | - Reserved |

Currently, CV types are as follows:
MPLS Connectivity Verification (CV) Types:

| Bit (Value) | Description |
|---|---|
| | |
| Bit 0 (0x01) | -ICMP Ping |
| Bit 1 (0x02) | - LSP Ping |
| Bit 2 (0x04) | - BFD |
| Bit 3 (0x08) | - Reserved |
| Bit 4 (0x10) | - Reserved |
| Bit 5 (0x20) | - Reserved |

CC Type identifies an ACH type (Control Channel type) supported by the PW. CV type identifies the CV type supported by the PW. The PW advertises the CC and CV capabilities of a PE node to a remote PE in the form of bitmap, and may support one, two, or more CC and CV types. Bits corresponding to supported types are set to 1. A PE receives a VCCV type of a remote PE, acquires a VCCV capability of the remote PE, and performs VCCV by using CC and CV functions supported by both ends.

Referring to FIG. 2, FIG. 2 is a flow chart of a second embodiment of the method for ACH capability negotiation according to the present invention.

In the embodiment of the present invention, a process of ACH capability negotiation performed by a first PE router and a second PE router mainly includes:

B1: Generate a label mapping message, add a G-ACH sub-TLV field in an interface parameter sub-TLV field of a PWid FEC element of the label mapping message, and write ACH capability information of local node into the G-ACH sub-TLV field.

In the embodiment of the present invention, the G-ACH sub-TLV field is added in the interface parameter sub-TLV field of the PWid FEC element (FEC128) of the generated label mapping message, and the ACH capability information of local node is written in the G-ACH sub-TLV field. The G-ACH sub-TLV field may be stored sequentially at the end of the label mapping message, and start from four new bytes.

B2: Send the label mapping message in which the ACH capability information of local node is written.

In the embodiment of the present invention, the first PE router or the second PE router performing the ACH capability negotiation send the label mapping message in which an ACH capability of local node is written to a remote PE router respectively. Upon reception of the label mapping message, the PE router can acquire the ACH capability information of the remote PE router, so that an ACH capability supported by all PE routes is used to transfer a special packet on a PW level.

In the embodiment of the present invention, a format of the PWid FEC element in the label mapping message is shown in Table 2.

**Table 2**

| PWID(0x80) | C | PW Type | PW info Length |
|---|---|---|---|
| Group ID | | | |
| PW ID | | | |
| Interface parameter sub-TLV | | | |
| ...... | | | |

PWID(0x80) indicates a pseudo wire identifier. PW Type indicates the pseudo wire type, PW info Length indicates the length of the pseudo wire information, Group ID indicates a group identifier, and Interface parameter sub-TLV indicates an interface parameter sub-Type-Length-Value.

A specific format of the interface parameter sub-TLV field is shown in Table 3.

**Table 3**

| | | |
|---|---|---|
| 0 | 2 | 4 |
| Sub-TLV Type | Length | Variable Length Value |
| Variable Length Value | | |
| ...... | | |

Sub-TLV Type indicates the type of the sub-TLV, Length indicates the length of the sub-TLV, and Variable Length Value indicates a variable length value.

In the embodiment of the present invention, the G-ACH sub-TLV field may be added in the Variable Length Value field, and the ACH capability information of local node may be written in the G-ACH sub-TLV field. A specific format of the G-ACH sub-TLV field is shown in Table 4.

**Table 4**

| | | |
|---|---|---|
| 0 | 2 | 4 |
| Sub-TLV Type | Length | ACH Capability Information Bitmap |
| Variable Length Value | | |
| ...... | | |

ACH Capability Information Bitmap is used to bear ACH capability information of a node, for example, support of a reserved label 13 (GAL 13), support of an ACH, support capabilities of ACHs, such as OAM, APS, MCC, and SCC, and support capabilities of OAM features of OAM tools, such as failure detection tools (LSP ping and BFD), Performance Monitoring (packet loss, delay, and jitter), failure reporting, and Alarm Suppression.

In the embodiment of the present invention, the interface parameter sub-TLV field of the PWid FEC element of the label mapping message is extended, so that PE routers that set up a PW can perform distribution and negotiation of a newly added ACH capability, thereby facilitating ACH capability negotiation on the PW level.

Referring to FIG. 3, FIG. 3 is a flow chart of a third embodiment of the method for ACH capability negotiation according to the present invention.

In the embodiment of the present invention, a process of ACH capability negotiation performed by a first PE router and a second PE router mainly includes :
C1: Generate a label mapping message, add a G-ACH sub-TLV field in an interface parameter TLV field of a generalized PWid FEC element of the label mapping message, and write ACH capability information of local node in the G-ACH sub-TLV field.

In the embodiment of the present invention, the G-ACH sub-TLV field is added in the interface parameter TLV field of the generalized PWid FEC element (FEC129) of the generated label mapping message, and the ACH capability information of local node is written in the G-ACH sub-TLV field. The G-ACH sub-TLV field may be stored sequentially at the end of the label mapping message, and start from four new bytes.

C2: Send the label mapping message in which the ACH capability information of local node is written.

In the embodiment of the present invention, the first PE router or the second PE router performing the ACH capability negotiation send the label mapping message in which an ACH capability of local node is written to a remote PE router respectively. Upon reception of the label mapping message, the PE router can acquire the ACH capability information of the remote PE router, so that an ACH capability supported by both ends is used to transfer a special packet on a PW level.

In the embodiment of the present invention, a format of the interface parameter TLV field of the generalized PWid FEC element in the label mapping message is shown in Table 5.

**Table 5**

| | | | | |
|---|---|---|---|---|
| 0 | | | 2 | 4 |
| 0 | 0 | PW Intf P.TLV(0x096B) | | Length |
| Sub-TLV Type | | | Length | Variable Length Value |
| Variable Length Value | | | | |
| ...... | | | | |

PW Intf P.TLV(0x0968) indicates a PW interface parameter TLV structure, Length indicates length, Sub-TLV Type indicates a sub-Type-Length-Value, and Variable Length Value indicates a variable length value.

In the embodiment of the present invention, the G-ACH sub-TLV field is added in the Variable Length Value field, and the ACH capability information of local node is written in the G-ACH sub-TLV field. The specific format of the G-ACH sub-TLV field is shown in Table 4, and will not be repeatedly described herein.

In the embodiment of the present invention, the interface parameter TLV field of the generalized PWid FEC element in the label mapping message is extended, so that PE routers that set up a PW can perform distribution and negotiation of a newly added ACH capability, thereby facilitating ACH capability negotiation on the PW level.

In the first embodiment, the second embodiment, and the third embodiment of the method for ACH capability negotiation, if the PEs at the two ends both support ACH application, the two ends, for example, select a CV type supported by both ends, encapsulate a CV packet in an ACH structure shown in Table 6, and send the CV packet, where the 4 bits 0001 identifies an associated channel type, Channel Type identifies a load type, and Version indicates a version.

**Table 6**

| | | | |
|---|---|---|---|
| 0 | | 2 | 4 |
| 0001 1 | Version | Reserved | Channel Type |

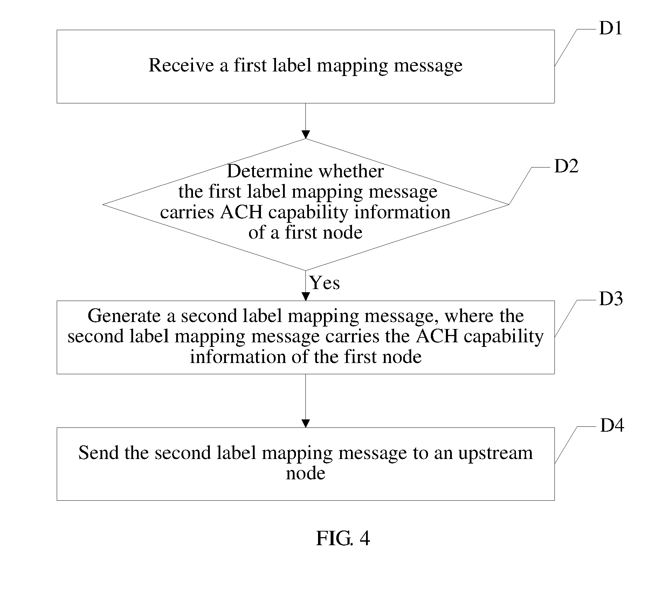

Referring to FIG. 4, FIG. 4 is a flow chart of a fourth embodiment of the method for ACH capability negotiation.

In the embodiment of the present invention, an LDP session starts to be set up between an ingress node and an egress node on an LSP level, and the session setup process may employ a Downstream Unsolicited (DU) manner or a Downstream on Demand (DOD) manner. If the DU manner is used, when the LDP session is being set up, the downstream egress node voluntarily sends a label mapping message to an upstream node thereof, rather than waits for the label request message sent by the upstream node. If the DOD manner is used, the upstream ingress node selects a downstream node according to information in a routing table thereof, and sends a label request message to the downstream node. The label request message includes descriptive information of an FEC. The downstream node forwards the label request message to the egress node. The egress node allocates a label to the FEC according to the received label request message, and sends the allocated label to the upstream node through a label mapping message. The label mapping message may carry ACH capability information of the egress node. In the embodiment of the present invention, the method for ACH capability negotiation mainly includes:

D1: Receive a first label mapping message.

In the embodiment of the present invention, an intermediate node receives the first label mapping message sent by a downstream node.

D2: Determine whether the first label mapping message carries ACH capability information of a first node.

In the embodiment of the present invention, the intermediate node determines whether the received first label mapping message carries the ACH capability information of the first node. If the received first label mapping message carries the ACH capability information of the first node, step D3 is executed, otherwise the first label mapping message is directly forwarded to an upstream node. The first node may be a downstream node of the intermediate node. In the embodiment of the present invention, the ACH capability information of the first node may be ACH capability information of an egress node.

The type field in a label mapping message carrying ACH capability information may be different from that in a label mapping message not carrying ACH capability information. In the embodiment of the present invention, whether the first label mapping message carries the ACH capability information may be determined according to the type field in the first label mapping message. Definitely, the manner of determining whether the first label mapping message carries the ACH capability information of the first node is not limited thereto, and other manners may be used.

D3: Generate a second label mapping message when the first label mapping message carries the ACH capability information of the first node, where the second label mapping message carries the ACH capability information of the first node.

In the embodiment of the present invention, in case that the first label mapping message carries the ACH capability information of the first node is determined, the intermediate node generates the second label mapping message. The generated second label mapping message carries the ACH capability information of the first node. Then, the intermediate node executes step D4. In the embodiment of the present invention, the type of the first label mapping message and the second label mapping message is a label mapping message. The first label mapping message and the second label mapping message may include the same ACH capability information, or include different ACH capability information.

D4: Send the second label mapping message to an upstream node.

In the embodiment of the present invention, the intermediate node sends the second label mapping message carrying the ACH capability information of the first node to an upstream node.

The intermediate node may save the ACH capability information of the first node carried in the first label mapping message to acquire ACH capabilities of other nodes, so as to support an OAM capability between Label Switch Routers (LSR) or between Tandem Connection Maintenance Entities (TCME).

After receiving the label mapping message, the upstream node continues to execute the processing process from step D2 to step D4 until an ingress node receives the label mapping message.

In the embodiment of the present invention, the intermediate node sends the ACH capability information of the egress node to the upstream node through the label mapping message. The ingress node may acquire an ACH capability of the egress node according to the received label mapping message. Compared with the prior art, in the embodiment of the present invention, the label mapping message carrying the ACH capability information of the node is sent, so as to support distribution and negotiation of ACH capabilities of the ingress node and the egress node on the LSP level, so that an ACH mechanism supported by all the nodes on the LSP level is used to transfer special packets between the nodes on the LSP level, that is, special packets and data packets are transferred and processed in the same manner on the LSP level.

In the embodiment of the present invention, in case the first label mapping message carries the ACH capability information of the first node, the intermediate node may generate the second label mapping message which carries ACH capability information of the intermediate node and the ACH capability information of the first node. The first node is a downstream node of the intermediate node. In the embodiment of the present invention, the ACH capability information of the first node may include ACH capability information of multiple intermediate nodes on an LSP and the ACH capability information of the egress node.

Specifically, after receiving the first label mapping message carrying the ACH capability information of the first node, the intermediate node may generate the second label mapping message carrying the ACH capability information of local node and the ACH capability information of the first node according to the first label mapping message, and send the second label mapping message carrying the ACH capability information of local node and the ACH capability information of the first node to the upstream node.

Alternatively, after receiving the first label mapping message carrying the first node, the intermediate node may write the ACH capability information of local node in the first label mapping message, and send the first label mapping message in which the ACH capability information of local node is written to the upstream node. In the embodiment of the present invention, the first label mapping message in which the ACH capability information of local node is written is the second label mapping message.

After receiving the second label mapping message, the upstream node may execute the aforementioned process until the ingress node receives the label mapping message. In the embodiment of the present invention, the label mapping message received by the ingress node carries the ACH capability information of all intermediate nodes and the egress node, and the ingress node may acquire ACH capabilities of the intermediate nodes and the egress node according to the received label mapping message.

Therefore, in the embodiment of the present invention, the label mapping message carrying the ACH capability information of local node is sent, so as to support distribution and negotiation of ACH capabilities of all nodes on the LSP, so special packets such as OAM packets can be transferred on the LSP level through an ACH mechanism, that is, special packets and data packets are transferred and processed in the same manner on the LSP level, thereby making network maintenance and failure detection more convenient.

In the embodiment of the present invention, implementation manners for the intermediate node or the egress node to write the ACH capability information of the node in the label mapping message may be as follows.

### Manner 1:

In the embodiment of the present invention, an interface parameter TLV field carrying a G-ACH sub-TLV field may be added in an FEC element field of the label mapping message, the ACH capability information of the node is written in the G-ACH sub-TLV field, and the label mapping message is sent to the upstream node. The structure of the interface parameter TLV field is the same as that of the interface parameter TLV field in the second embodiment of the method for ACH capability negotiation, and the manner of writing the ACH capability information is also the same as that in the second embodiment of the method for ACH capability negotiation, which will not be repeatedly described herein.

Alternatively, in the embodiment of the present invention, an interface parameter sub-TLV field carrying a G-ACH sub-TLV field may be added in the FEC element field of the label mapping message, and the ACH capability information of the node is written in the G-ACH sub-TLV field. The structure of the interface parameter sub-TLV field is the same as that of the interface parameter sub-TLV field in the third embodiment of the method for ACH capability negotiation, and the manner of writing the ACH capability information is also the same as that in the third embodiment of the method for ACH capability negotiation, which will not be repeatedly described herein.

In the embodiment of the present invention, the ACH capability information of the node may also be written in a CV reserved field of a VCCV parameter in the label mapping message. The structure of the CV reserved field of the VCCV parameter is the same as that of the CV reserved field of the VCCV parameter in the first embodiment of the method for ACH capability negotiation, and the manner of writing the ACH capability information is also the same as that in the first embodiment of the method for ACH capability negotiation, which will not be repeatedly described herein.

The egress node may write the ACH capability information of local node in the label mapping message. The intermediate node may write the ACH capability information of local node and the ACH capability information of the first node in the label mapping message.

In the three aforementioned writing manners, when the label mapping message is sent, the U and F bits of the TLV field may both be set to 1, so that a node which doesn't recognize the TLV can transparently transmits the TLV to other nodes instead of drop the TLV.

### Manner 2:

An ACH capability sub-TLV field is added in the FEC element field of the label mapping message, and the ACH capability information of the node is written in the ACH capability sub-TLV field. The egress node may write the ACH capability information of local node in the label mapping message. The intermediate node may write the ACH capability information of local node and the ACH capability information of the first node in the label mapping message.

A format of the ACH capability sub-TLV field may be as shown in Table 7.

**Table 7**

| | | | | | | |
|---|---|---|---|---|---|---|
| 0 | U | F | 2 | | Flag1 | Flag2 4 |
| 1 | 1 | ACH TLV Type | Length | Reserve | S1 | S2 |
| Node ACH sub-TLVs | | | | | | |
| ...... | | | | | | |

The U and F bits of the TLV of the carried ACH information of the node are both set to 1, so that intermediate nodes not supporting the ACH TLV can transparently forward the information. In the embodiment of the present invention, two identification bits S1 and S2 are used, each of which occupies 1 bit. The identification bit S1 is used to identify whether an intermediate node need report its ACH capability to other nodes after receiving a label mapping message. If S1 is set to 1, it indicates distribution, and in this case after receiving a label mapping message, the intermediate node sends a label mapping message carrying an ACH capability of local node to an upstream node. If S1 is set to 0, it indicates that the intermediate node need not distribute its ACH capability to other nodes, and in this case when the intermediate node forwards the received label mapping message or generates a new label mapping message, it does not write the ACH capability information of local node into the label mapping message. The identification bit S2 may be used to identify whether the intermediate node need save the ACH capability information of the first node carried in the label mapping message. For example, the intermediate node may save the ACH capability information of the first node carried in the label mapping message when S2 is set to 1, and not save the ACH capability information of the first node carried in the label mapping message when S2 is set to 0. ACH TLV Type indicates a TLV type of ACH, Length indicates a length, and a specific format of Node ACH sub-TLVs is shown in Table 8.

**Table 8**

| | | | |
|---|---|---|---|
| 0 | | 2 | 4 |
| 1 | 1 | Node ACHSub-TLV Type | Length |
| Node ID | | | |
| Interface 1 ID | | | |
| Interface 1 ACH capability parameter bitmap | | | |
| Interface 2 ID | | | |
| Interface 2 ACH capability parameter bitmap | | | |
| ...... | | | |

A node may include multiple interfaces. The interface ACH capability parameter bitmap may include information of negotiation of capabilities of OAM, APS, MCC, and SCC and use of a special label GAL (13). OAM information may include negotiation of information of LSP Ping, BFD, ICMP Ping, PM and RDI. The PM may include parameters of packet loss, performance delay, and jitter.

### Manner 3:

Manner 3 differs from Manner 2 in: ACH capability information of an interface is put in Node ACH Sub-TLV Type as a sub-TLV in Manner 3, that is, ACH TLV Type may include Node ACH sub-TLVs of multiple nodes. Node ACH sub-TLV may include Interface ACH Sub-TLVs of multiple interfaces. A specific format of ACH TLV is shown in Table 9.

**Table 9**

| | | | |
|---|---|---|---|
| 0 U F | | 2 | 4 |
| 1 | 1 | ACH TLV Type | Length |
| Node ACH sub-TLVs | | | |
| ...... | | | |

The U and F bits of the TLV carrying ACH information of the node are both set to 1, so that intermediate nodes not supporting the ACH TLV can transparently forward the information. A format of Node ACH sub-TLV is shown in Table 10.

**Table 10**

| | | | |
|---|---|---|---|
| 0 | | 2 | 4 |
| 1 | 1 | Node ACH Sub-TLV Type | Length |
| Node ID | | | |
| Interface ACH Sub-TLVs | | | |
| ...... | | | |

Node ACH sub-TLV may include ACH capability information of multiple interfaces, Length indicates a length, and Node ID indicates a node identifier. A format of Interface ACH Sub-TLV is shown in Table 11.

**Table 11**

| | | | |
|---|---|---|---|
| 0 | | 2 | 4 |
| 1 | 1 | Interface ACHSub-TLV Type | Length |
| Interface 1 ID | | | |
| Interface 1 ACH capability parameter bitmap | | | |

Length indicates a length, and Interface 1 ID indicates an identifier of an interface 1, which may be an Internet Protocol version 4 (IPv4) address, an Internet Protocol version 6 (IPv6) address or an interface index of the interface, or other identifiers. The interface ACH capability parameter bitmap may include information of negotiation of capabilities of OAM, APS, MCC, and SCC and use of a special label GAL (13). OAM information may include negotiation of information of LSP Ping, BFD, ICMP Ping, PM and RDI. The PM may include parameters of packet loss, performance delay, and jitter.

Compared with Manner 2, in Manner 3, ACH capability information of each interface is put in a node TLV as an independent TLV so as to facilitate extension of the borne ACH capability information, thereby achieving better flexibility.

It should be noted that, the TLV field and the specific format thereof in the aforementioned three implementation manners are only examples for illustrating the basic idea, and the implementation thereof supports any possible variation.

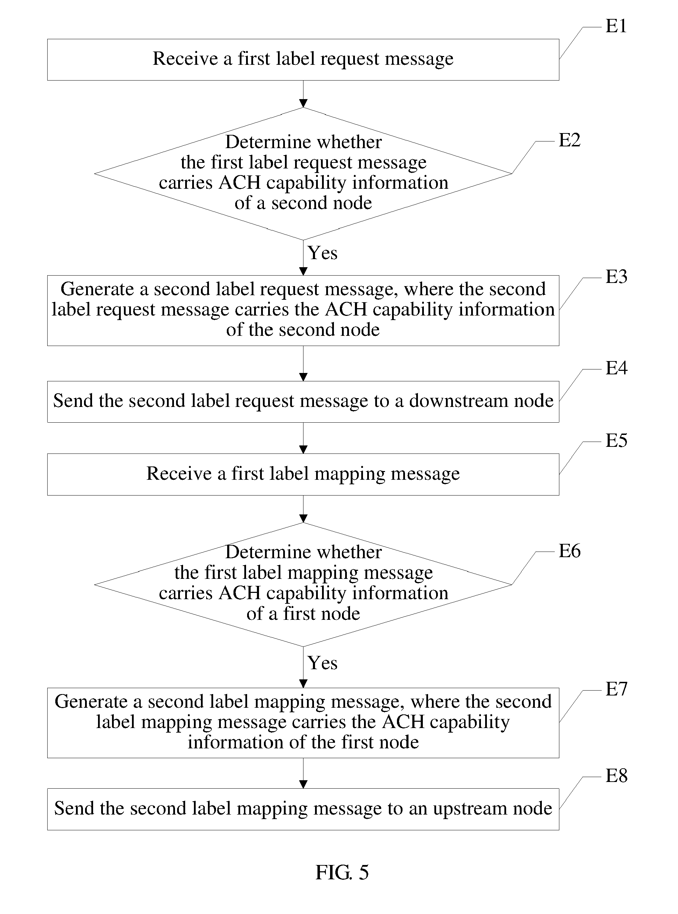

Referring to FIG. 5, FIG. 5 is a schematic diagram of a fifth embodiment of the method for ACH capability negotiation.

In the embodiment of the present invention, an LDP session starts to be set up between an ingress node and an egress node on an LSP level, and the session setup process may employ a DOD manner. The ingress node sends a label request message to a downstream node. The label request message may carry ACH capability information of the ingress node. In the embodiment of the present invention, the method for ACH capability negotiation mainly includes:

E1: Receive a first label request message.

An intermediate node receives the first label request message sent by an upstream node.

E2: Determine whether the first label request message carries ACH capability information of a second node.

In the embodiment of the present invention, the intermediate node may determine whether the received first label request message carries the ACH capability information of the second node. If the intermediate node determines that the first label request message carries the ACH capability information of the second node, step E3 is executed, otherwise the first label request message is directly forwarded to a downstream node. The second node may be an upstream node of the intermediate node. In the embodiment of the present invention, the ACH capability information of the second node may be the ACH capability information of the ingress node.

A type field in a label request message carrying ACH capability information may be different from that in a label request message not carrying ACH capability information. In the embodiment of the present invention, whether the first label request message carries the ACH capability information may be determined according to the type field in the first label request message. Definitely, the manner of determining whether the first label request message carries the ACH capability information of the second node is not limited thereto, and other manners may be used.

E3: Generate a second label request message when the first label request message carries the ACH capability information of the second node, where the second label request message carries the ACH capability information of the second node.

In the embodiment of the present invention, in case the first label request message carries the ACH capability information of the second node, the intermediate node generates the second label request message. The generated second label request message carries the ACH capability information of the second node. Then, the intermediate node executes step E4. In the embodiment of the present invention, the type of the first label request message and the second label request message is a label request message. The first label request message and the second request mapping message may include the same ACH capability information, or include different ACH capability information.

E4: Send the second label request message to a downstream node.

In the embodiment of the present invention, the intermediate node sends the second label request message carrying the ACH capability information of the second node to a downstream node.

In the embodiment of the present invention, the intermediate node may save the ACH capability information of the second node carried in the first label request message to acquire ACH capabilities of other nodes, so as to support OAM capabilities between LSRs or between TCMEs.

After receiving the label request message, the downstream node continues to execute step E2 to step E4. For an intermediate node not capable of recognizing the ACH capability information carried in the second label request message, the intermediate node does not perform any processing on the label request message, and directly forwards the second label request message to a downstream node until the egress node receives the label request message.

After receiving the label request message, the egress node may save the ACH capability information of the second node carried in the label request message, so that the egress node can acquire an ACH capability of the ingress node. The egress node sends a label mapping message to the upstream node according to the label request message. The label mapping message may include ACH capability information of the egress node.

E5: Receive a first label mapping message.

In the embodiment of the present invention, the intermediate node receives the first label mapping message sent by the downstream node.

E6: Determine whether the first label mapping message carries ACH capability information of a first node.

In the embodiment of the present invention, the intermediate node determines whether the received first label mapping message carries the ACH capability information of the first node. If the received first label mapping message carries the ACH capability information of the first node, step E7 is executed, otherwise the first label mapping message is directly forwarded to the upstream node. The first node may be a downstream node of the intermediate node. In the embodiment of the present invention, the ACH capability information of the first node may be the ACH capability information of the egress node.

A type field in a label mapping message carrying ACH capability information may be different from that in a label mapping message not carrying ACH capability information. In the embodiment of the present invention, whether the first label mapping message carries the ACH capability information may be determined according to the type field in the first label mapping message. Definitely, the manner of determining whether the first label mapping message carries the ACH capability information of the first node is not limited thereto, and other manners may be used.

E7: Generate a second label mapping message when the first label mapping message carries the ACH capability information of the first node, where the second label mapping message carries the ACH capability information of the first node.

In the embodiment of the present invention, in case that the first label mapping message carries the ACH capability information of the first node is determined, the second label mapping message is generated. The generated second label mapping message carries the ACH capability information of the first node. Then, the intermediate node executes step E8. In the embodiment of the present invention, the type of the first label request message and the second label request message is a label request message. The first label mapping message and the second label mapping message may include the same ACH capability information, or include different ACH capability information.

In the embodiment of the present invention, after receiving the first label mapping message carrying the ACH capability information of the first node, the intermediate node may generate the second label mapping message carrying the ACH capability information of local node and the ACH capability information of the first node, and send the second label mapping message carrying the ACH capability information of local node and the ACH capability information of the first node to the upstream node.

Alternatively, after receiving the first label mapping message carrying the ACH capability information of the first node, the intermediate node may write the ACH capability information of local node in the first label mapping message, and send the first label mapping message in which the ACH capability information of local node is written to the upstream node. In the embodiment of the present invention, the first label mapping message in which the ACH capability information of local node is written is the second label mapping message.

E8: Send the second label mapping message to the upstream node.

In the embodiment of the present invention, the intermediate node sends the second label mapping message carrying the ACH capability information of the first node to the upstream node.

The intermediate node may save the ACH capability information of the first node carried in the first label mapping message to acquire ACH capabilities of other nodes, so as to support an OAM capability between LSRs or between TCMEs.

After receiving the label mapping message, the upstream node executes the processing process from step E6 to step E8 until the ingress node receives the label mapping message.

In the embodiment of the present invention, the label mapping message received by the ingress node carries an ACH capability of the egress node, and the ingress node may acquire the ACH capability of the egress node according to the received label mapping message.

Compared with the prior art, in the embodiment of the present invention, the label request message and the label mapping message carrying the ACH capability information of the node are sent, so as to support distribution and negotiation of ACH capabilities of the ingress node and the egress node on the LSP level, so that an ACH mechanism supported by all of the nodes on the LSP level is used between the nodes on the LSP level to transfer special packets, that is, special packets and data packets are transferred and processed by the same manner on the LSP level, thereby making network maintenance and failure detection more convenient.

In the embodiment of the present invention, in case the first label request message carries the ACH capability information of the second node, the intermediate node may generate the second label request message, which carries the ACH capability information of the intermediate node and the ACH capability information of the second node. The second node may be an upstream node of the intermediate node. In the embodiment of the present invention, the ACH capability information of the second node may include ACH capability information of multiple intermediate nodes on an LSP and the ACH capability information of the ingress node.

In the embodiment of the present invention, after receiving the first label request message carrying the ACH capability information of the second node, the intermediate node may generate the second label request message carrying the ACH capability information of local node and the ACH capability information of the second node, and send the second label request message carrying the ACH capability information of local node and the ACH capability information of the second node to the downstream node.

Alternatively, after receiving the first label request message carrying the ACH capability information of the second node, the intermediate node may write the ACH capability information of local node in the first label request message, and send the first label request message in which the ACH capability information of local node is written to the downstream node. In the embodiment of the present invention, the first label request message in which the ACH capability information of local node is written is the second label request message.

After receiving the second label request message, the downstream node may also execute the aforementioned process until the egress node receives the label request message. The label request message received by the egress node carries the ACH capability information of all intermediate nodes and the ingress node. The egress node may acquire ACH capabilities of the intermediate nodes and the ingress node according to the received label mapping message.

In the embodiment of the present invention, after receiving the label mapping message carrying the ACH capability information of the first node, the intermediate node may further send the label mapping message carrying the ACH capability information of the intermediate node and the ACH capability information of the first node to the upstream node. The first node may be a downstream node of the intermediate node. In the embodiment of the present invention, the ACH capability information of the first node may include ACH capability information of multiple intermediate nodes on an LSP and the ACH capability information of the egress node.

In the embodiment of the present invention, after receiving the first label mapping message carrying the ACH capability information of the first node, the intermediate node may generate the second label mapping message carrying the ACH capability information of local node and the ACH capability information of the first node, and send the second label mapping message carrying the ACH capability information of local node and the ACH capability information of the first node to the upstream node.

Alternatively, after receiving the first label mapping message carrying the first node, the intermediate node may write the ACH capability information of local node in the first label mapping message, and send the first label mapping message in which the ACH capability information of local node is written to the upstream node. In the embodiment of the present invention, the first label mapping message in which the ACH capability information of local node is written is the second label mapping message.

After receiving the second label mapping message, the upstream node may execute the aforementioned processing process until the ingress node receives the label mapping message. In the embodiment of the present invention, the label mapping message received by the ingress node carries the ACH capability information of all intermediate nodes and the egress node, and the ingress node may acquire ACH capabilities of the intermediate nodes and the egress node according to the received label mapping message. Therefore, both the ingress node and the egress node can acquire the ACH capabilities of all nodes on the LSP, and the ingress node and the egress node can employ the ACH capability bi-directionally.

In the embodiment of the present invention, the label request message and the label mapping message carrying the ACH capability information of the node are sent, so as to support distribution and negotiation of ACH capabilities of all nodes on the LSP, so that OAM packets and other special packets can be transferred on the LSP level through an ACH mechanism, that is, special packets and data packets are transferred and processed in the same manner on the LSP level, thereby making network maintenance and failure detection more convenient.

In the embodiment of the present invention, the manners for the intermediate node and the egress node to write the ACH capability information of the node in the label mapping message are the same as the manners of writing the ACH capability information of the node in the label mapping message in the fourth embodiment, which include three manners, and will not be repeatedly described herein. Furthermore, the manners for the intermediate node and the ingress node to write the ACH capability information of the node in the label request message are the same as the manners of writing the ACH capability information of the node in the label mapping message in the fourth embodiment of the method for ACH capability negotiation, which include three manners, and will not be repeatedly described herein.

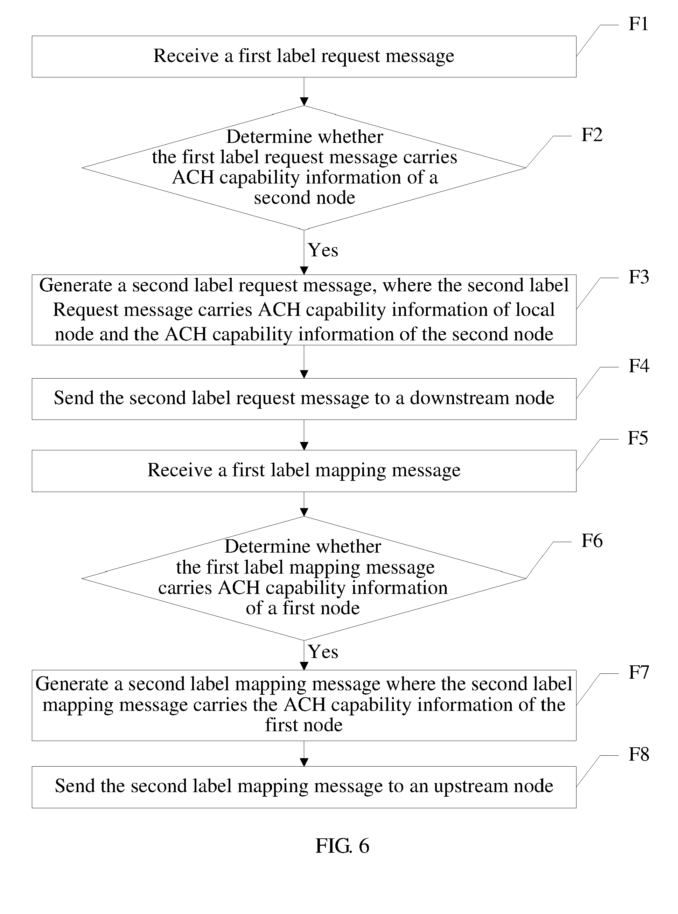

Referring to FIG. 6, FIG. 6 is a flow chart of a sixth embodiment of the method for ACH capability negotiation.

In the embodiment of the present invention, an LDP session starts to be set up between an ingress node and an egress node on an LSP level, and the session setup process may employ a DOD manner. The ingress node sends a label request message to a downstream node. The label request message may carry ACH capability information of the ingress node. In the embodiment of the present invention, the method for ACH capability negotiation mainly includes:

F1: Receive a first label request message.

An intermediate node receives the first label request message sent by an upstream node.

F2: Determine whether the first label request message carries ACH capability information of a second node.

In the embodiment of the present invention, the intermediate node may determine whether the received first label request message carries the ACH capability information of the second node. If the intermediate node determines that the first label request message carries the ACH capability information of the second node, step F3 is executed, otherwise the first label request message is directly forwarded to a downstream node. The second node may be an upstream node of the intermediate node. In the embodiment of the present invention, the ACH capability information of the second node may include ACH capability information of multiple intermediate nodes on an LSP and the ACH capability information of the ingress node.

A type field in a label request message carrying ACH capability information may be different from that in a label request message not carrying ACH capability information. In the embodiment of the present invention, whether the first label request message carries the ACH capability information may be determined according to the type field in the first label request message. Definitely, the manner of determining whether the first label request message carries the ACH capability information of the second node is not limited thereto, and other manners may be used.

F3: Generate a second label request message when the first label request message carries the ACH capability information of the second node, where the second label request message carries ACH capability information of local node and the ACH capability information of the second node.

In the embodiment of the present invention, in case that the first label request message carries the ACH capability information of the second node is determined, the intermediate node generates the second label request message. The generated second label request message carries the ACH capability information of local node and the ACH capability information of the second node. Then, the intermediate node executes step F4. In the embodiment of the present invention, the type of the first label request message and the second label request message is a label request message. The first label request message and the second request mapping message may include the same ACH capability information, or include different ACH capability information.

In the embodiment of the present invention, the intermediate node may save the ACH capability information of the second node carried in the first label request message to acquire ACH capabilities of other nodes, so as to support an OAM capability between LSRs or between TCMEs.

F4: Send the second label request message to a downstream node.

In the embodiment of the present invention, the intermediate node sends the second label request message carrying the ACH capability information of local node and the ACH capability information of the second node to the downstream node.

After receiving the label request message, the downstream node continues to execute step F2 to step F4. For an intermediate node not capable of recognizing the ACH capability information carried in the second label request message, the intermediate node does not perform any processing on the label request message, and directly forwards the second label request message to a downstream node until the egress node receives the label request message.

After receiving the label request message, the egress node may save the ACH capability information of the second node carried in the label request message, so that the egress node can acquire an ACH capability of the ingress node. The egress node sends a first label mapping message to the upstream node according to the label request message. The label mapping message may include ACH capability information of the egress node.

F5: Receive the first label mapping message.

In the embodiment of the present invention, the intermediate node receives the first label mapping message sent by the downstream node.

F6: Determine whether the first label mapping message carries ACH capability information of a first node.

In the embodiment of the present invention, the intermediate node determines whether the received first label mapping message carries the ACH capability information of the first node. If the received first label mapping message carries the ACH capability information of the first node, step F7 is executed, otherwise the first label mapping message is directly forwarded to an upstream node. The first node may be a downstream node of the intermediate node. In the embodiment of the present invention, the ACH capability information of the first node may include ACH capability information of the multiple intermediate nodes on the LSP and the ACH capability information of the egress node.

A type field in a label mapping message carrying ACH capability information may be different from that in a label mapping message not carrying ACH capability information. In the embodiment of the present invention, whether the first label mapping message carries the ACH capability information may be determined according to the type field in the first label mapping message. Definitely, the manner of determining whether the first label mapping message carries the ACH capability information of the first node is not limited thereto, and other manners may be used.

F7: Generate a second label mapping message when the first label mapping message carries the ACH capability information of the first node, where the second label mapping message carries the ACH capability information of the first node.

In the embodiment of the present invention, in case that the first label mapping message carries the ACH capability information of the first node is determined, the intermediate node generates the second label mapping message. The generated second label mapping message carries the ACH capability information of the first node. Then, the intermediate node executes step F8. In the embodiment of the present invention, the type of the first label request message and the second label request message is a label mapping message. The first label mapping message and the second label mapping message may include the same ACH capability information, or include different ACH capability information.

In the embodiment of the present invention, after receiving the first label mapping message carrying the ACH capability information of the first node, the intermediate node may generate the second label mapping message carrying the ACH capability information of local node and the ACH capability information of the first node, and send the second label mapping message carrying the ACH capability information of local node and the ACH capability information of the first node to the upstream node.

Alternatively, after receiving the first label mapping message carrying the ACH capability information of the first node, the intermediate node may write the ACH capability information of local node in the first label mapping message, and send the first label mapping message in which the ACH capability information of local node is written to the upstream node. In the embodiment of the present invention, the first label mapping message in which the ACH capability information of local node is written is the second label mapping message.

F8: Send the second label mapping message to an upstream node.

In the embodiment of the present invention, the intermediate node sends the second label mapping message carrying the ACH capability information of the first node to the upstream node.

After receiving the label mapping message, the upstream node executes the processing process from step F6 to step F8 until the label mapping message is sent to the ingress node.

In the embodiment of the present invention, the label mapping message received by the ingress node carries the ACH capability information of all intermediate nodes and the egress node, and the ingress node may acquire ACH capabilities of the intermediate nodes and the egress node according to the received label mapping message.

In the embodiment of the present invention, the ingress node and the egress node perform distribution and negotiation of ACH capabilities through the label request message and the label mapping message, and can also acquire the ACH capability information of the intermediate nodes on the path, thereby enabling the distribution and negotiation of the ACH capabilities of the nodes on the LSP level. The ingress node and the egress node can employ the ACH capability bi-directionally, that is, special packets such as OAM packets and data packets are transferred and processed in the same manner on the LSP level, thereby making network maintenance and failure detection more convenient.

In the embodiment of the present invention, the intermediate node may save the ACH capability information of the first node carried in the first label mapping message to acquire ACH capabilities of other nodes, so as to support an OAM capability between LSRs or between TCMEs.

In the embodiment of the present invention, the manners for the intermediate node and the ingress node to write the ACH capability information of the node in the label request message are the same as the manners of writing the ACH capability information of the node in the label mapping message in the fourth embodiment, which include three manners, and will not be repeatedly described herein. Furthermore, the manners for the egress node to write the ACH capability information of the node in the label mapping message are the same as the manners of writing the ACH capability information in the label mapping message in the fourth embodiment, which include three manners, and will not be repeatedly described herein.

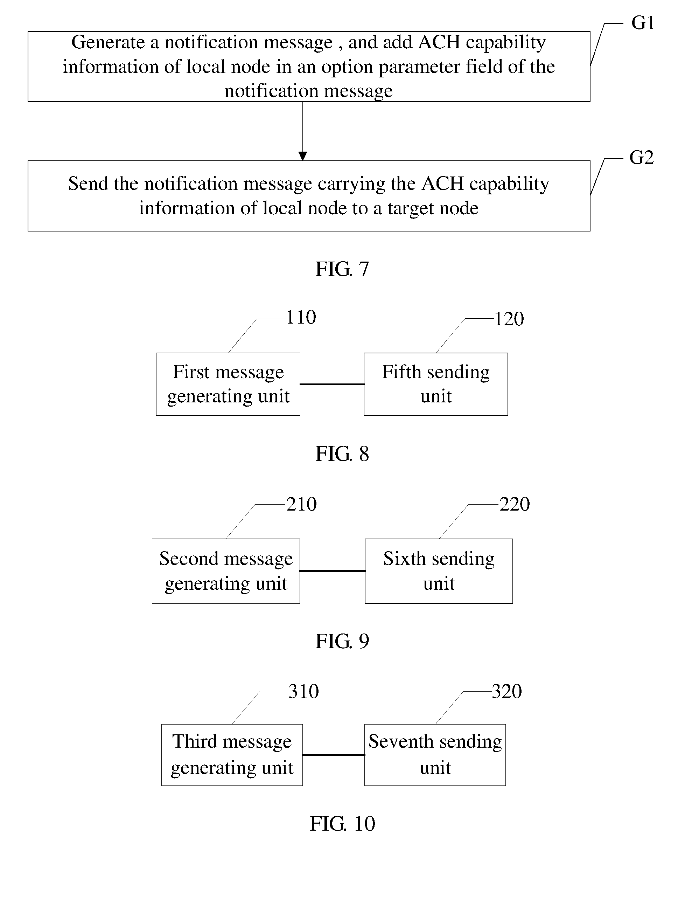

Referring to FIG. 7, FIG. 7 is a flow chart of a seventh embodiment of the method for ACH capability negotiation according to the present invention.

In the embodiment of the present invention, after ACH capability negotiation of an ingress node and an egress node is completed, that is, after the ingress node, an intermediate node on an LDP path, and the egress node complete label mapping, if an ACH capability of the ingress node or the egress node changes, the ingress node or the egress node corresponding to the change may execute the following steps.

G1: Generate a notification message, and add ACH capability information of local node in an option parameter field of the notification message.

In the embodiment of the present invention, the ingress node and the egress node generate the notification message after the ACH capability thereof changes. The ingress node and the egress node may add the ACH capability information of local node in the option parameter field of the notification message. Definitely, the field in which the ACH capability information may be written is not limited to the option parameter field, and may also be other fields in the notification message.

G2: Send the notification message carrying the ACH capability information of local node to a target node.

In the embodiment of the present invention, the ingress node or the egress node may send the notification message carrying the ACH capability information of local node to the target node. For the ingress node, the target node is the egress node. For the egress node, the target node is the ingress node.

After receiving the notification message, the corresponding egress node or ingress node can learn that the ACH capability changes, and update the ACH capability information of the node according to the notification message.

Referring to FIG. 8, FIG. 8 is a schematic diagram of a first embodiment of a network device provided by the embodiment of the present invention.

The embodiment of the network device according to the present invention includes a first message generating unit 110 and a fifth sending unit 120.

The first message generating unit 110 is configured to generate a label mapping message, and write ACH capability information of local node in a CV reserved field of a VCCV parameter in the label mapping message.

The fifth sending unit 120 is configured to send the label mapping message in which the ACH capability information of local node is written.

The embodiment of the network device according to the present invention may be used in the aforementioned corresponding first embodiment of the method for ACH capability negotiation.

Referring to FIG. 9, FIG. 9 is a schematic diagram of a second embodiment of the network device provided by the present invention.

The embodiment of the network device according to the present invention includes a second message generating unit 210 and a sixth sending unit 220.

The second message generating unit 210 is configured to generate a label mapping message, add a G-ACH sub-TLV field in an interface parameter sub-TLV field of a PWid FEC element of the label mapping message, and write ACH capability information of local node in the G-ACH sub-TLV field.

The sixth sending unit 220 is configured to send the label mapping message in which the ACH capability information of local node is written.

The embodiment of the network device according to the present invention may be used in the aforementioned corresponding second embodiment of the method for ACH capability negotiation.

Referring to FIG. 10, FIG. 10 is a schematic diagram of a third embodiment of the network device provided by the present invention.

The embodiment of the network device according to the present invention includes a third message generating unit 310 and a seventh sending unit 320.

The third message generating unit 310 is configured to generate a label mapping message, add a G-ACH sub-TLV field in an interface parameter TLV field of a generalized PWid FEC element of the label mapping message, and write ACH capability information of local node in the G-ACH sub-TLV field.

The seventh sending unit 320 is configured to send the label mapping message in which the ACH capability information of local node is written.

The embodiment of the network device according to the present invention may be used in the aforementioned corresponding third embodiment of the method for ACH capability negotiation.

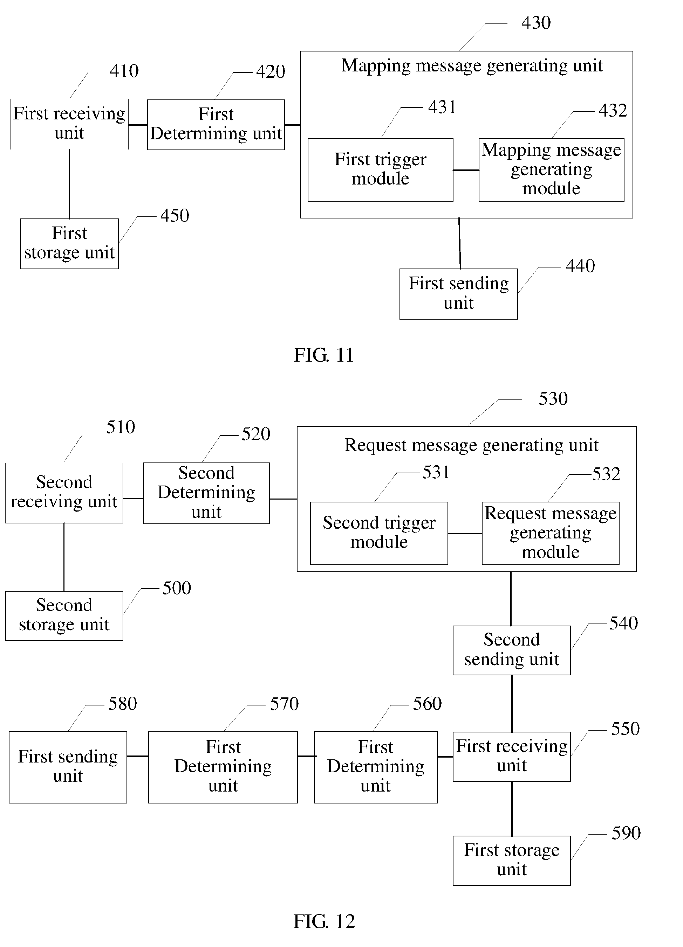

Referring to FIG. 11, FIG. 11 is a schematic diagram of a fourth embodiment of the network device provided by the present invention.

The network device provided by the embodiment of the present invention may include:
a first receiving unit 410, configured to receive a first label mapping message;
a first determining unit 420, configured to determine whether the first label mapping message carries ACH capability information of a first node;
a mapping message generating unit 430, configured to generate a second label mapping message when the first determining unit 420 determines that the first label mapping message carries the ACH capability information of the first node, where the second label mapping message carries the ACH capability information of the first node; and
a first sending unit 440, configured to send the second label mapping message to an upstream node.

In the embodiment of the present invention, the second label mapping message further carries ACH capability information of local node.

In the embodiment of the present invention, the mapping message generating unit 430 may include:
a first trigger module 431, configured to trigger a mapping message generating module 432 to generate the second label mapping message when the first determining unit 420 determines that the first label mapping message carries the ACH capability information of the first node; and
the mapping message generating module 432, configured to generate the second label mapping message carrying the ACH capability information of local node and the ACH capability information of the first node.

The embodiment of the present invention may further include: a first storage unit 450, configured to save the ACH capability information of the first node.

The embodiment of the network device according to the present invention may be used in the aforementioned corresponding fourth embodiment of the method for ACH capability negotiation.

Referring to FIG. 12, FIG. 12 is a schematic diagram of a fifth embodiment of the network device provided by the present invention.

The network device provided by the embodiment of the present invention may include:
a second receiving unit 510, configured to receive a first label request message;
a second determining unit 520, configured to determine whether the first label request message carries ACH capability information of a second node;
a request message generating unit 530, configured to generate a second label request message when the second determining unit 520 determines that the first label request message carries the ACH capability information of the second node, where the second label request message carries the ACH capability information of the second node;
a second sending unit 540, configured to send the second label request message to a downstream node;
a first receiving unit 550, configured to receive a first label mapping message;
a first determining unit 560, configured to determine whether the first label mapping message carries ACH capability information of a first node;
a mapping message generating unit 570, configured to generate a second label mapping message when the first determining unit 560 determines that the first label mapping message carries the ACH capability information of the first node, where the second label mapping message carries the ACH capability information of the first node; and
a first sending unit 580, configured to send the second label mapping message to an upstream node.

In the embodiment of the present invention, the second label request message further carries ACH capability information of local node.

In the embodiment of the present invention, the second label mapping message further carries the ACH capability information of local node.

In the embodiment of the present invention, the request message generating unit 530 may further include:
a second trigger module 531, configured to trigger a request message generating module 532 to generate the second label request message when the second determining unit 520 determines that the first label request message carries the ACH capability information of the second node; and
the request message generating module 532, configured to generate the second label request message carrying the ACH capability information of local node and the ACH capability information of the second node.

The embodiment of the present invention may further include:
a first storage unit 590, configured to save the ACH capability information of the first node; and
a second storage unit 500, configured to save the ACH capability information of the second node.

The embodiment of the network device according to the present invention may be used in the aforementioned corresponding fifth embodiment of the method for ACH capability negotiation.

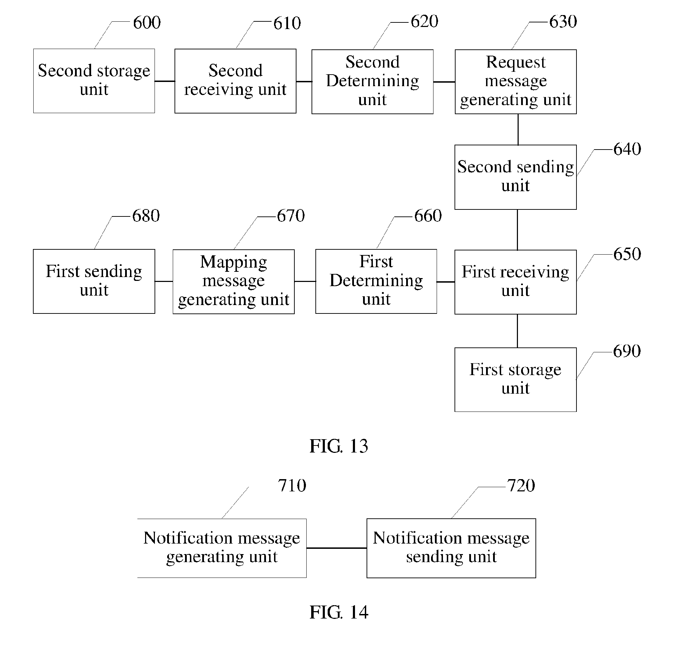

Referring to FIG. 13, FIG. 13 is a schematic diagram of a sixth embodiment of the network device provided by the present invention.

The network device provided by the embodiment of the present invention may include:
a second receiving unit 610, configured to receive a first label request message;
a second determining unit 620, configured to determine whether the first label request message carries ACH capability information of a second node;
a request message generating unit 630, configured to generate a second label request message when the second determining unit 620 determines that the first label request message carries the ACH capability information of the second node, where the second label request message carries ACH capability information of local node and the ACH capability information of the second node;
a second sending unit 640, configured to send the second label request message to a downstream node;
a first receiving unit 650, configured to receive a first label mapping message;
a first determining unit 660, configured to determine whether the first label mapping message carries ACH capability information of a first node;
a mapping message generating unit 670, configured to generate a second label mapping message when the first determining unit 660 determines that the first label mapping message carries the ACH capability information of the first node, where the second label mapping message carries the ACH capability information of the first node; and
a first sending unit 680, configured to send the second label mapping message to an upstream node.

The embodiment of the present invention may further include:
a first storage unit 690, configured to save the ACH capability information of the first node; and
a second storage unit 600, configured to save the ACH capability information of the second node.

The embodiment of the network device according to the present invention may be used in the aforementioned corresponding sixth embodiment of the method for ACH capability negotiation.

Referring to FIG. 14, FIG. 14 is a schematic diagram of a seventh embodiment of the network device provided by the present invention.

The network device according to the embodiment of the present invention mainly includes a notification message generating unit 710 and a notification message sending unit 720.

The notification message generating unit 710 is configured to generate a notification message, and add ACH capability information of local node in an option parameter field of the notification message.

The notification message sending unit 720 is configured to send the notification message carrying the ACH capability information of local node to a target node.

The embodiment of the network device according to the present invention may be used in the aforementioned corresponding seventh embodiment of the method for ACH capability negotiation.

Through the above description of the implementation, it is clear to persons skilled in the art that the present invention may be accomplished through hardware, or through software plus a necessary universal hardware platform. Based on this, the technical solutions of the present invention may be embodied in the form of a software product. The software product may be stored in a nonvolatile storage medium (for example, a read-only optical disk, a Universal Serial Bus (USB) flash drive, or a removable hard disk) and contain several instructions used to instruct a computer device (for example, a personal computer, a receiver, or a network device) to perform the method according to the embodiments of the present invention.

The method and network device for ACH capability negotiation according to the present invention are described in detail above. Persons of ordinary skill in the art can make variations and modifications to the present invention in terms of the specific implementations and application scopes according to the ideas of the present invention. Therefore, the specification shall not be construed as a limit to the present invention.

## Claims

1. A method for Associated Channel (ACH) capability negotiation, comprising:
receiving a first label mapping message;
determining whether the first label mapping message carries ACH capability information of a first node;
if the first label mapping message carries the ACH capability information of the first node, generating a second label mapping message, wherein the second label mapping message carries the ACH capability information of the first node; and
sending the second label mapping message to an upstream node.

2. The method according to claim 1, wherein
the second label mapping message further carries ACH capability information of local node, and
the generating the second label mapping message comprises:
generating the second label mapping message carrying the ACH capability information of local node and the ACH capability information of the first node.

3. The method according to claim 2, wherein the generating the second label mapping message carrying the ACH capability information of local node and the ACH capability information of the first node comprises:
generating the second label mapping message according to the first label mapping message, adding an interface parameter Type-Length-Value (TLV) field carrying a Generic Associated Channel Header (G-ACH) sub-TLV field in a Forwarding Equivalence Class (FEC) element field of the second label mapping message, and writing the ACH capability information of local node and the ACH capability information of the first node in the G-ACH sub-TLV field; or
generating the second label mapping message according to the first label mapping message, adding an interface parameter sub-TLV field carrying a G-ACH sub-TLV field in an FEC element field of the second label mapping message, and writing the ACH capability information of local node and the ACH capability information of the first node in the G-ACH sub-TLV field; or generating the second label mapping message according to the first label mapping message, and writing the ACH capability information of local node and the ACH capability information of the first node in a Connectivity Verification (CV) reserved field of a Virtual Circuit Connectivity Verification (VCCV) parameter in the second label mapping message; or
generating the second label mapping message according to the first label mapping message, adding an ACH capability sub-TLV field in an FEC element field of the second label mapping message, and writing the ACH capability information of local node and the ACH capability information of the first node in the ACH capability sub-TLV field.

4. The method according to claim 1 or 2, wherein before the receiving the first label mapping message, the method further comprises:
receiving a first label request message;
determining whether the first label request message carries ACH capability information of a second node;
if the first label request message carries the ACH capability information of the second node, generating a second label request message, wherein the second label request message carries the ACH capability information of the second node; and
sending the second label request message to a downstream node.

5. The method according to claim 4, wherein
the second label request message further carries the ACH capability information of local node.

6. The method according to any one of claim 1 to 4, wherein after the receiving the first label mapping message, the method further comprises:
saving the ACH capability information of the first node.

7. The method according to claim 4, wherein after the receiving the first label request message, the method further comprises:
saving the ACH capability information of the second node.

8. A network device, comprising:
a first receiving unit, configured to receive a first label mapping message;
a first determining unit, configured to determine whether the first label mapping message carries Associated Channel (ACH) capability information of a first node;
a mapping message generating unit, configured to generate a second label mapping message when the first determining unit determines that the first label mapping message carries the ACH capability information of the first node, wherein the second label mapping message carries the ACH capability information of the first node; and
a first sending unit, configured to send the second label mapping message to an upstream node.

9. The network device according to claim 8, wherein
the second label mapping message further carries ACH capability information of local node.

10. The network device according to claim 9, wherein the mapping message generating unit comprises:
a first trigger module, configured to trigger a mapping message generating module to generate the second label mapping message when the first determining unit determines that the first label mapping message carries the ACH capability information of the first node; and
the mapping message generating module, configured to generate the second label mapping message carrying the ACH capability information of local node and the ACH capability information of the first node.

11. The network device according to claim 8 or 9, further comprising:
a second receiving unit, configured to receive a first label request message;
a second determining unit, configured to determine whether the first label request message carries ACH capability information of a second node;
a request message generating unit, configured to generate a second label request message when the second determining unit determines that the first label request message carries the ACH capability information of the second node, wherein the second label request message carries the ACH capability information of the second node; and
a second sending unit, configured to send the second label request message to a downstream node.

12. The network device according to claim 11, wherein the request message generating unit comprises:
a second trigger module, configured to trigger a request message generating module to generate the second label request message when the second determining unit determines that the first label request message carries the ACH capability information of the second node; and
the request message generating module, configured to generate the second label request message carrying the ACH capability information of local node and the ACH capability information of the second node.

13. The network device according to claim 11, wherein
the second label request message further carries the ACH capability information of local node.

14. The network device according to any one of claim 11, further comprising:
a first storage unit, configured to save the ACH capability information of the first node; and a second storage unit, configured to save the ACH capability information of the second node.

15. A method for Associated Channel (ACH) capability negotiation, comprising:
generating a notification message, and adding ACH capability information of local node in an option parameter field of the notification message;
sending the notification message carrying the ACH capability information of local node to a target node.

16. A method for Associated Channel (ACH) capability negotiation, comprising:
generating a label mapping message, and writing ACH capability information of local node in a Connectivity Verification (CV) reserved field of a Virtual Circuit Connectivity Verification (VCCV) parameter in the label mapping message; or
generating a label mapping message, adding a Generic Associated Channel Header (G-ACH) sub-Type-Length-Value (TLV) field in an interface parameter sub-TLV field of a Pseudo Wire Identifier (PWid) Forwarding Equivalence Class (FEC) element of the label mapping message, and writing the ACH capability information of local node in the G-ACH sub-TLV field; or
generating a label mapping message, adding a G-ACH sub-TLV field in an interface parameter TLV field of a generalized PWid FEC element of the label mapping message, and writing the ACH capability information of local node in the G-ACH sub-TLV field; and
sending the label mapping message in which the ACH capability information of local node is written.

17. A network device, comprising:
a notification message generating unit, configured to generate a notification message, and add Associated Channel (ACH) capability information of local node in an option parameter field of the notification message; and
a notification message sending unit, configured to send the notification message carrying the ACH capability information of local node to a target node.

18. A network device, comprising:
a first message generating unit, configured to generate a label mapping message, and write Associated Channel (ACH) capability information of local node in a Connectivity Verification (CV) reserved field of a Virtual Circuit Connectivity Verification (VCCV) parameter in the label mapping message; and
a fifth sending unit, configured to send the label mapping message in which the ACH capability information of local node is written.

19. A network device, comprising:
a second message generating unit, configured to generate a label mapping message, add a Generic Associated Channel Header (G-ACH) sub-Type-Length-Value (TLV) field in an interface parameter sub-TLV field of a Pseudo Wire Identifier (PWid) Forwarding Equivalence Class (FEC) element of the label mapping message, and write Associated Channel (ACH) capability information of local node in the G-ACH sub-TLV field; and
a sixth sending unit, configured to send the label mapping message in which the ACH capability information of local node is written.

20. A network device, comprising:
a third message generating unit, configured to generate a label mapping message, add a Generic Associated Channel Header (G-ACH) sub-Type-Length-Value (TLV) field in an interface parameter TLV field of a generalized Pseudo Wire Identifier (PWid) Forwarding Equivalence Class (FEC) element of the label mapping message, and write Associated Channel (ACH) capability information of local node in the G-ACH sub-TLV field; and
a seventh sending unit, configured to send the label mapping message in which the ACH capability information of local node is written.
